# EUROPEAN PATENT APPLICATION

(11) **EP 4 711 114 A1**
(43) Date of publication of application: **18.03.2026**
(21) Application number: 24839490.0
(22) Date of filing: 24.06.2024
(51) Int. Cl.: B29C 43/12, B29C 43/56, B29C 70/44

(54) **MOLDED ARTICLE PRODUCTION METHOD AND MOLDED ARTICLE PRODUCTION APPARATUS**

(30) Priority: 13.07.2023 JP 2023115301
(71) Applicant: Mitsubishi Heavy Industries, Ltd., Tokyo 100-8332 (JP)
(72) Inventor: MATSUMOTO, Kensuke, Tokyo 100-8332 (JP); NOMA, Kazuki, Tokyo 100-8332 (JP); NAGANAWA, Wataru, Tokyo 100-8332 (JP); KATO, Makoto, Tokyo 100-8332 (JP); TAKEUCHI, Hiromasa, Tokyo 100-8332 (JP); SHINOHARA, Takumi, Tokyo 100-8332 (JP); KANEMASU, Masayuki, Tokyo 100-8332 (JP)
(74) Representative: Hoffmann Eitle
(86) International application number: PCT/JP2024/022760
(87) International publication number: WO 2025/013594

(57) **Abstract**

The present invention provides a molded product manufacturing method with which it is possible to suppress the formation of wrinkles in a workpiece. A manufacturing method comprising: a workpiece positioning step in which a workpiece is positioned on a forming die (10); a step in which a bag sheet is overlaid on the work piece positioned on the upper surface of the forming die from the upper surface of the work piece; and a step in which the space covered by the bag sheet is depressurized, wherein the workpiece is a sheet-like member having a surface greater than that of the upper surface of the forming die, and workpiece positioning step is executed in a state in which a compressible member for supporting a peripheral part of the workpiece is positioned at the periphery of the forming die.

## Description

### Technical Field

The present disclosure relates to a molded product manufacturing method and a molded product manufacturing apparatus.

### Background Art

For example, PTL 1 discloses a forming system for a composite structural material. A forming step using the system includes a step of disposing an uncured composite structural material on a mold tool. In addition, the forming step includes a step of covering the composite structural material from above with a backing plate of an estram. In addition, the forming step includes a step of depressurizing a space covered with the backing plate of the estram.

### Citation List

### Patent Literature

[PTL 1] Japanese Patent No. 5615864

### Summary of Invention

### Technical Problem

In the step of depressurizing, in a case where an end portion of the composite structural material comes into contact with the mold tool before the inside, the composite structural material may be wrinkled.

### Solution to Problem

According to one aspect of the present disclosure, a molded product manufacturing method is provided. The molded product manufacturing method includes a workpiece arrangement step of arranging a workpiece member to come into contact with a surface of a mold tool; a step of covering the workpiece member with a bag sheet from a side opposite to the mold tool among the workpiece member; and a step of depressurizing a space covered with the bag sheet. The workpiece member is a sheet-like member having an area larger than an area of the surface of the mold tool. The workpiece arrangement step is executed in a state in which a compressible member for supporting a peripheral portion of the workpiece member is arranged around the mold tool.

### Brief Description of Drawings

FIG. 1 is a top view showing a planar configuration of a manufacturing apparatus according to a first embodiment.
FIG. 2 is a cross-sectional view showing a cross-sectional configuration of the manufacturing apparatus according to the same embodiment.
FIG. 3 is a cross-sectional view showing a cross-sectional configuration of the manufacturing apparatus according to the same embodiment.
FIG. 4 is a plan view showing a planar configuration of a frame member according to the same embodiment.
FIG. 5 is a cross-sectional view showing a step for manufacturing a molded product according to the same embodiment.
FIG. 6 is a side view showing the step for manufacturing the molded product according to the same embodiment.
FIG. 7 is a cross-sectional view showing a step for manufacturing a molded product according to the same embodiment.
FIG. 8 is a cross-sectional view showing the step for manufacturing the m molded product according to the same embodiment.
FIG. 9 is a cross-sectional view showing the step for manufacturing the molded product according to the same embodiment.
FIG. 10 is a side view showing the step for manufacturing the molded product according to the same embodiment.
FIG. 11 is a cross-sectional view showing the step for manufacturing the molded product according to the same embodiment.
FIG. 12 is a cross-sectional view showing the step for manufacturing the molded product according to the same embodiment.
FIG. 13 is a cross-sectional view showing an effect of the same embodiment.
FIG. 14 is a top view showing a planar configuration of a manufacturing apparatus according to a second embodiment.
FIG. 15 is a plan view showing a planar configuration of a frame member according to the same embodiment.
FIG. 16 is a side view showing a configuration of a bellows dam according to a third embodiment.
FIG. 17 is a perspective view showing a bellows dam of the same embodiment.
FIG. 18A is a cross-sectional view showing the step for producing the molded product according to the same embodiment.
FIG. 18B is a cross-sectional view showing the step for producing the molded product according to the same embodiment.
FIG. 18C is a cross-sectional view showing the step for producing the molded product according to the same embodiment.
FIG. 19A is a cross-sectional view showing a cross-sectional configuration of a manufacturing apparatus according to a modification example of the same embodiment.
FIG. 19B is a cross-sectional view showing a cross-sectional configuration of a manufacturing apparatus according to a modification example of the same embodiment.

### Description of Embodiments

### <First Embodiment>

Hereinafter, a first embodiment will be described with reference to the drawings.

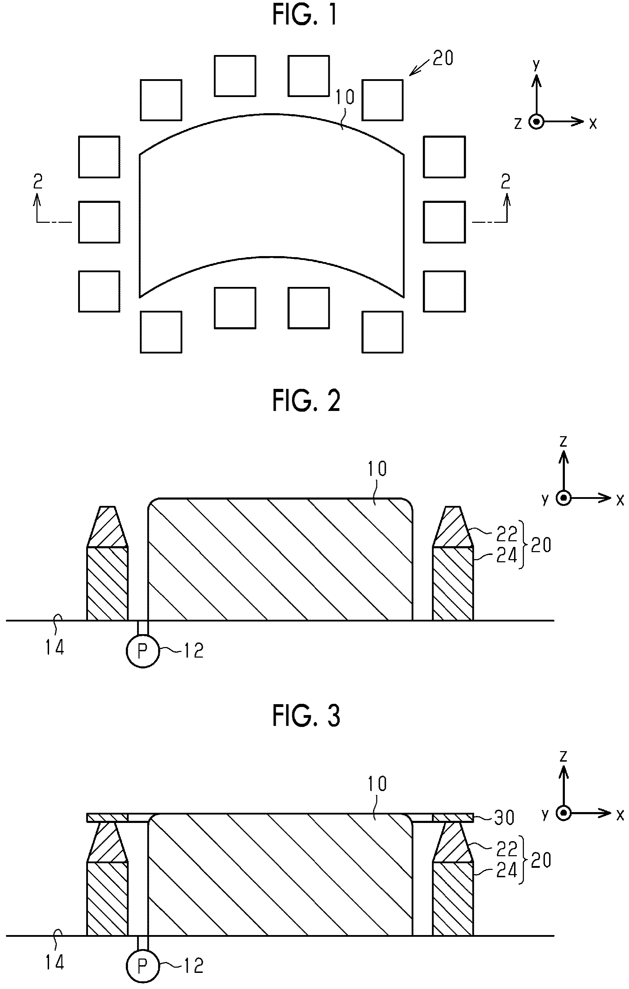

FIG. 1 shows a manufacturing apparatus for a molded product according to the present embodiment.

The molded product according to the present embodiment is obtained by forming a composite material consisting of a thermosetting resin and carbon fiber. Specifically, the molded product is obtained by forming a sheet-like member that is a prepreg as the sheet-like composite material by the manufacturing apparatus shown in FIG. 1.

A mold tool 10 shown in FIG. 1 is for forming the above-described sheet-like member. In FIG. 1, a positive direction of a z-axis is an upward direction in a vertical direction. In addition, an x-axis and a y-axis are horizontal directions. FIG. 1 is a plan view of the manufacturing apparatus as viewed from an upper side.

In the present embodiment, as an example, since the molded product has an arch shape, an upper surface shape of the mold tool 10 is an arch shape. A plurality of compressible members 20 are disposed around the mold tool 10. The compressible member 20 is a member that contracts by applying a pressure. Specifically, the compressible member 20 is a member that contracts by releasing a fluid contained therein by applying a pressure. The compressible member 20 is, for example, a sponge.

FIG. 2 shows a 2-2 cross section of FIG. 1.

As shown in FIG. 2, the compressible member 20 comprises an upper member 22 and a lower member 24. The lower member 24 has, for example, a shape of a rectangular parallelepiped. The upper member 22 has, for example, a shape of a square pyramid frustum. The upper member 22 is disposed on the lower member 24. Specifically, a bottom surface of the upper member 22 is in contact with an upper surface of the lower member 24. A shape of the bottom surface of the upper member 22 may be similar to a shape of the upper surface of the lower member 24. An area of the bottom surface of the upper member 22 may be equal to or less than an area of the upper surface of the lower member 24. In addition, the area of the bottom surface of the upper member 22 may be equal to or larger than the area of the upper surface of the lower member 24.

As shown in FIG. 2, the manufacturing apparatus comprises a pump 12 that sucks a gas from a side of a floor surface 14 on which the mold tool 10 and the compressible member 20 are placed.

FIG. 3 shows a state of the manufacturing apparatus before the sheet-like member is disposed on the mold tool 10.

As shown in FIG. 3, before the sheet-like member is disposed on the mold tool 10, a frame member 30 is disposed on an upper surface of the compressible member 20. The frame member 30 is a plate-like member that supports an end part of the sheet-like member.

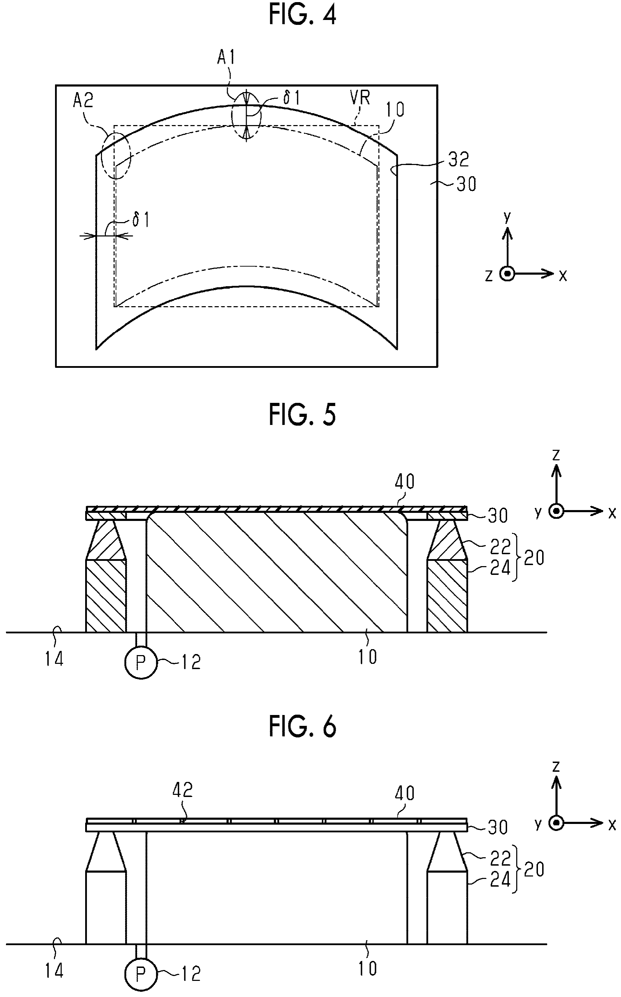

FIG. 4 shows a planar configuration of the frame member 30.

As shown in FIG. 4, the frame member 30 has an opening portion 32. The opening portion 32 has a shape similar to an upper surface of the mold tool 10. This is a setting for suppressing a variation in a distance between the frame member 30 and the mold tool 10. FIG. 4 shows that distances between the frame member 30 and the mold tool 10 in the X direction and the Y direction at two different positions are equal to each other and are equal to a distance δ1.

FIG. 4 shows a virtual rectangle VR in which the upper surface of the mold tool 10 is inscribed. As shown in FIG. 4, a length in a direction from the edge portion of the opening portion 32 to the contour of the virtual rectangle VR in a direction from the edge portion of the opening portion 32 to the inside of the opening portion 32 in which the direction is positive is smaller in a portion where the distance between the upper surface of the mold tool 10 and the virtual rectangle VR is large than in a portion where the distance is small. The length in the direction from the edge portion of the opening portion 32 to the virtual rectangle VR is a length in a direction orthogonal to a side of the virtual rectangle VR. In addition, the distance between the virtual rectangle VR and the upper surface of the mold tool 10 is a length of a perpendicular line from the upper surface of the mold tool 10 to a side of the virtual rectangle VR.

FIG. 4 shows a portion A2 where the distance between the virtual rectangle VR and the upper surface of the mold tool 10 is large and a portion A1 where the distance between the virtual rectangle VR and the upper surface of the mold tool 10 is small. A length in the direction from the edge portion of the opening portion 32 to the contour of the virtual rectangle VR at the portion A2 is negative.

FIG. 5 shows a state in which the sheet-like member 40 is disposed on the mold tool 10. FIG. 5 corresponds to a cross section taken along a line 2-2 of FIG. 1. As shown in FIG. 5, the sheet-like member 40 covers the entire upper surface of the mold tool 10 and is disposed such that an end portion thereof is disposed on the frame member 30. In other words, the end portion of the sheet-like member 40 is supported by the frame member 30.

FIG. 6 shows a side view of the mold tool 10 and the sheet-like member 40 in a state in which the sheet-like member 40 is disposed on the mold tool 10.

As shown in FIG. 6, a plurality of slits 42 are provided in the end portion of the sheet-like member 40. This is a setting for easily bending the sheet-like member 40 at a portion in contact with the edge portion of the upper surface of the mold tool 10.

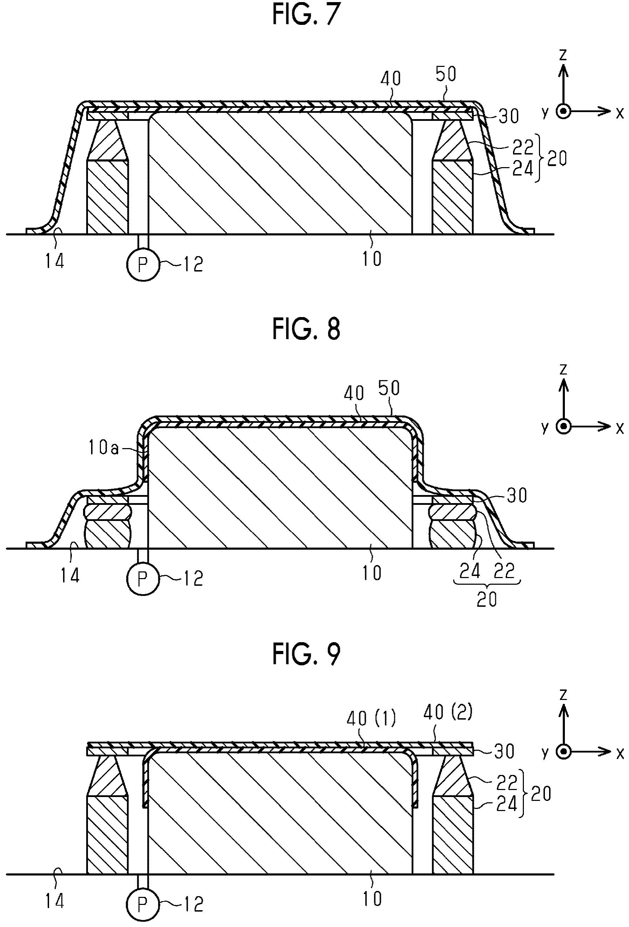

FIG. 7 shows a state in which a bag sheet 50 is placed on the sheet-like member 40. The bag sheet 50 has flexibility. It is desirable that the bag sheet 50 has stretchability.

The bag sheet 50 has a larger dimension than the sheet-like member 40. The bag sheet 50 has a size such that an end portion thereof can be in contact with the floor surface 14 on which the mold tool 10 is placed. In the state shown in FIG. 7, the bag sheet 50 is in contact with the floor surface 14, and a space in which the mold tool 10, the compressible member 20, the frame member 30, and the sheet-like member 40 are accommodated is formed by the bag sheet 50 and the floor surface 14.

FIG. 8 shows a state in which the space surrounded by the bag sheet 50 and the floor surface 14 is depressurized by suctioning the gas in the space by the pump 12. As shown in FIG. 8, the compressible member 20 is compressed by the depressurization. Specifically, in a case where the space is depressurized, the bag sheet 50 is displaced downward, and thus the frame member 30 pushes the compressible member 20 downward. Therefore, the compressible member 20 is compressed to be reduced in the z-axis direction. As a result, the frame member 30 is displaced downward. As a result, a region close to the end portion of the sheet-like member 40 gradually comes into contact with the mold tool 10 from a region close to the upper surface of the mold tool 10.

As shown in FIG. 8, in a state in which the end portion of the sheet-like member 40 is in close contact with the side wall 10a of the mold tool 10, the frame member 30 is positioned lower than the edge portion of the sheet-like member 40. This is possible by adjusting the amount of compression of the compressible member 20.

FIG. 9 shows a state in which the sheet-like member 40(2) is disposed on the sheet-like member 40(1) molded by the step shown in FIG. 8. The number in parentheses after the sheet-like member 40 is assigned to identify the sheet-like member 40. In particular, the larger the number in parentheses, the later the step in which the member is formed in the forming step.

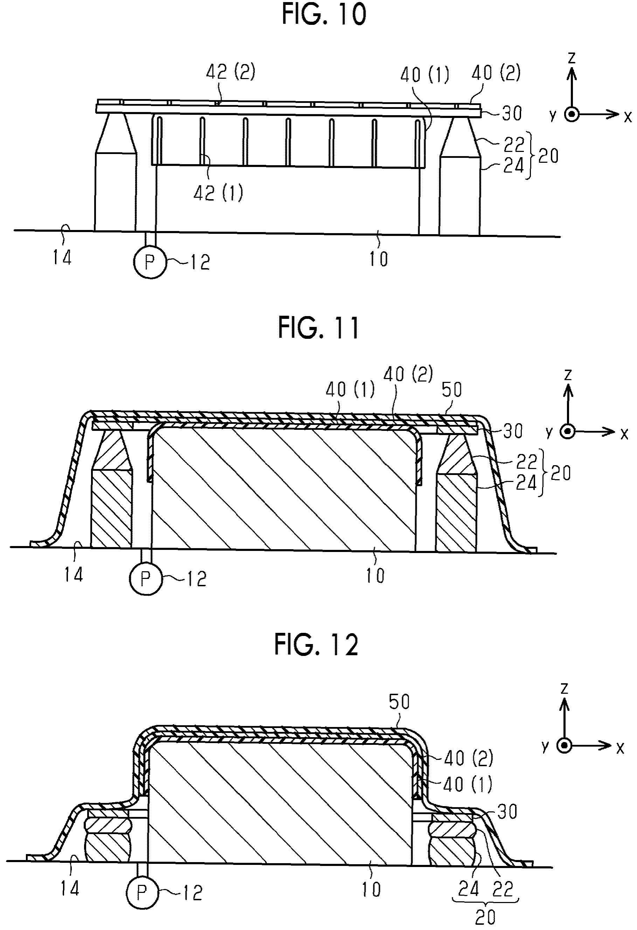

FIG. 10 is a side view of the state shown in FIG. 9. As shown in FIG. 10, the slit 42(2) of the sheet-like member 40(2) is provided at a position different from the slit 42(1) of the sheet-like member 40(1).

FIG. 11 shows a state in which the bag sheet 50 is placed on the sheet-like member 40(2). The bag sheet 50 comes into contact with the floor surface 14, and a space in which the mold tool 10, the compressible member 20, the frame member 30, and the sheet-like members 40(1) and 40(2) are accommodated is formed by the bag sheet 50 and the floor surface 14.

FIG. 12 shows a state in which the space partitioned by the bag sheet 50 and the floor surface 14 is depressurized by suctioning the gas in the space by the pump 12. The frame member 30 is lowered downward by depressurizing the space. As a result, the region close to the end portion of the sheet-like member 40(2) gradually comes into contact with the sheet-like member 40(1) from the region close to the upper surface of the mold tool 10.

By repeating such a step, the plurality of sheet-like members 40 are molded along the shape of the mold tool 10. Then, after forming a predetermined number of sheet-like members 40, the molded product is completed through a step of heating and pressurizing the sheet-like members 40.

### "Operation and Effect of Present Embodiment"

In a case where the sheet-like member 40 is disposed on the mold tool 10, the end part of the sheet-like member 40 is supported by the frame member 30. The frame member 30 is disposed on the compressible member 20. Thereafter, the bag sheet 50 is put on the sheet-like member 40 from above, and the space between the bag sheet 50 and the floor surface 14 is depressurized. As a result, the portion of the sheet-like member 40 that protrudes from the upper surface of the mold tool 10 comes into contact with the side wall 10a of the mold tool 10 in order from the side close to the upper surface of the mold tool 10. As a result, the sheet-like member 40 can be molded while suppressing the occurrence of wrinkles.

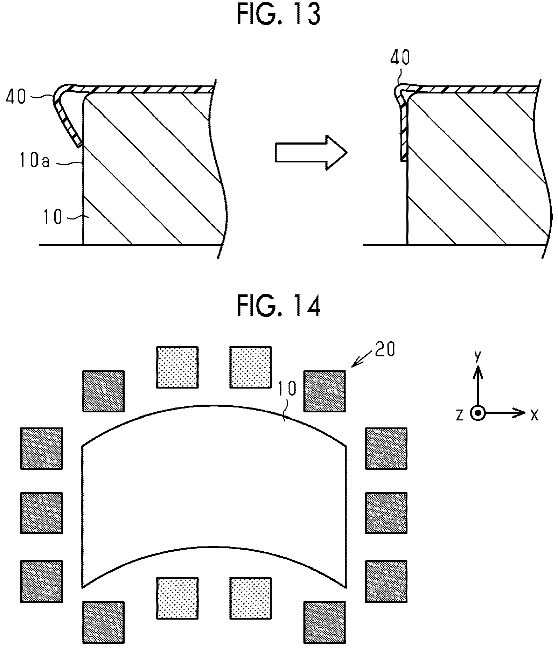

On the other hand, in a case where the end part of the sheet-like member 40 is not supported by the frame member 30 before the depressurization, as shown on the left side of FIG. 13, the end part of the sheet-like member 40 may come into contact with the side wall 10a of the mold tool 10 first. In this case, as shown on the right side of FIG. 13, wrinkles may occur in the sheet-like member 40.

As described above, in the present embodiment, since wrinkles can be suppressed from occurring in the sheet-like member 40, the series of producing steps can be automated to produce a molded product having stable quality.

With the above-described present embodiment, the following operations and effects can be obtained.

(1-1) In a case where the sheet-like member 40 is disposed on the upper part of the mold tool 10 and the end part of the sheet-like member 40 is directly supported by the compressible member 20, the sheet-like member 40 may be displaced by being pulled by the bag sheet 50. In this case, the specific region of the sheet-like member 40 may be displaced downward first, and wrinkles may occur in the sheet-like member 40. In addition, in a case where the end part of the sheet-like member 40 is directly supported by the compressible member 20, the compressible member 20 may be pulled by the tension of the bag sheet 50 and may be displaced to a side away from the mold tool 10 and collapse instead of being compressed downward. Therefore, in the present embodiment, the frame member 30 is interposed between the sheet-like member 40 and the compressible member 20. As a result, the above-described problem can be suppressed from occurring.

(1-2) The opening portion 32 of the frame member 30 and the upper surface of the mold tool 10 have similar shapes. As a result, the variation in the distance between the edge portion of the opening portion 32 and the mold tool 10 can be suppressed as much as possible. As a result, a portion of the sheet-like member 40 that protrudes from the upper surface of the mold tool 10 can be uniformly sucked downward by the decompression in the space partitioned by the bag sheet 50 and the floor surface 14.

(1-3) The compressible member 20 is configured of a plurality of members disposed to be spaced from each other instead of being formed of a single member surrounding the mold tool 10. As a result, in the decompression step, as the plurality of members are compressed, even in a case where the plurality of members expand in a direction facing each other, the plurality of members can be suppressed from interfering with each other.

(1-4) The upper member 22 has a shape of a square pyramid frustum. As a result, in a case where a pressure is applied to the compressible member 20 from above, the upper portion of the upper member 22 is more easily compressed toward the upper portion. Therefore, a pressure required for starting the compression of the compressible member 20 can be reduced as compared to a case where the cross-sectional area of the upper member 22 is uniform in the up-down direction. Therefore, in the decompression step, the compressible member 20 can be smoothly compressed.

In addition, the bottom surface of the upper member 22 is brought into contact with the lower member 24. Therefore, the posture of the compressible member 20 can be stabilized as compared to a case where the upper surface of the upper member 22 is brought into contact with the lower member 24.

(1-5) The slit 42 is provided in a portion of the sheet-like member 40 that protrudes from the upper surface of the mold tool 10. As a result, the portion of the sheet-like member 40 that protrudes from the mold tool 10 can be easily bent.

(1-6) Slits 42 are provided at mutually different positions between the mutually different sheet-like members 40. As a result, the strength of the molded product can be increased as compared to a case where the slits 42 are the same between the different sheet-like members 40.

### <Second Embodiment>

Hereinafter, regarding a second embodiment, differences from the first embodiment will be mainly described with reference to the drawings.

FIG. 14 is a top view of the manufacturing apparatus according to the present embodiment. In FIG. 14, the compressible member 20 is a member having a compression amount different depending on a position at which the member is disposed, with respect to the applied pressure. Specifically, in FIG. 14, the member having a darker dot has a smaller compression amount with respect to the applied pressure than the member having a lighter dot. The example shown in FIG. 14 is an example in which the compressible member 20 consists of two members having different compression amounts with respect to the applied pressure. This can be implemented, for example, by using two types of members having different upper surface areas as the upper member 22. That is, the member having a large compression amount corresponds to the member having a small upper surface area of the upper member 22.

In the example shown in FIG. 14, the compressible member 20 disposed in a region close to the protruding portion center and the recessed portion center of the upper surface of the mold tool 10 is a member that is more likely to be compressed than the compressible member 20 disposed in the other region.

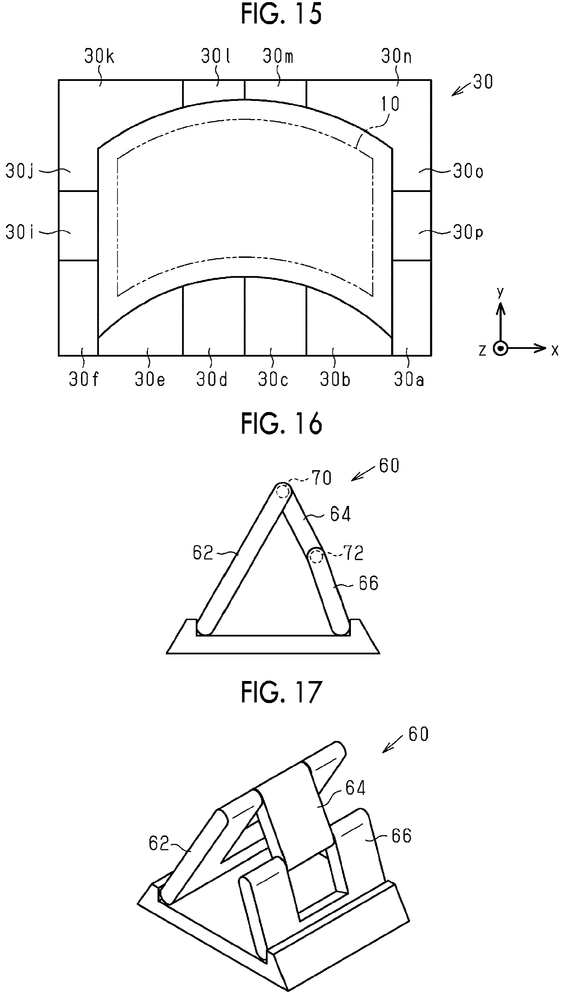

FIG. 15 shows the frame member 30 according to the present embodiment. A shape of the frame member 30 according to the present embodiment is the same as the shape of the frame member 30 according to the first embodiment. However, the frame member 30 according to the present embodiment is divided into a plurality of parts 30a to 30p. Therefore, each of the parts 30a to 30p is displaced downward independently of each other in accordance with the compression amount of the compressible member 20 in contact with each other.

Here, a portion of the sheet-like member 40 disposed near the protruding portion center and the recessed portion center of the upper surface of the mold tool 10 is less likely to be bent than a portion of the sheet-like member 40 disposed in the other portion of the upper surface of the mold tool 10. Therefore, a wrinkle is likely to occur in the portion of the sheet-like member 40 disposed near the protruding portion center and the recessed portion center of the upper surface of the mold tool 10.

On the other hand, in the present embodiment, the compressible member 20 disposed near the protruding portion center and the recessed portion center of the upper surface of the mold tool 10 is a member that is likely to be compressed. Therefore, in a case where the space partitioned by the bag sheet 50 and the floor surface 14 is depressurized, a difference occurs in the speed at which the compressible member 20 is compressed. That is, the speed at which the compressible member 20 disposed near the protruding portion center and the recessed portion center of the upper surface of the mold tool 10 is compressed is higher than the speed at which the compressible member 20 disposed in the region close to the other portion is compressed. Therefore, the portions of the sheet-like member 40 disposed near the protruding portion center and the recessed portion center of the upper surface of the mold tool 10 can be promoted to bend along the shape of the upper surface of the mold tool 10. As a result, it is possible to promote the portion of the sheet-like member 40 disposed near the protruding portion center and the recessed portion center of the upper surface of the mold tool 10 to be bent before a wrinkle occurs in the portion.

### <Third Embodiment>

Hereinafter, regarding a third embodiment, differences from the first embodiment will be mainly described with reference to the drawings.

In the present embodiment, a bellows dam 60 shown in FIG. 16 is used instead of the compressible member 20.

As shown in FIG. 16, the bellows dam 60 comprises a first plate member 62, a second plate member 64, and a third plate member 66. The first plate member 62 and the second plate member 64 are connected by a hinge portion 70. The second plate member 64 and the third plate member 66 are connected by a hinge portion 72.

FIG. 17 is a perspective view of the bellows dam 60.

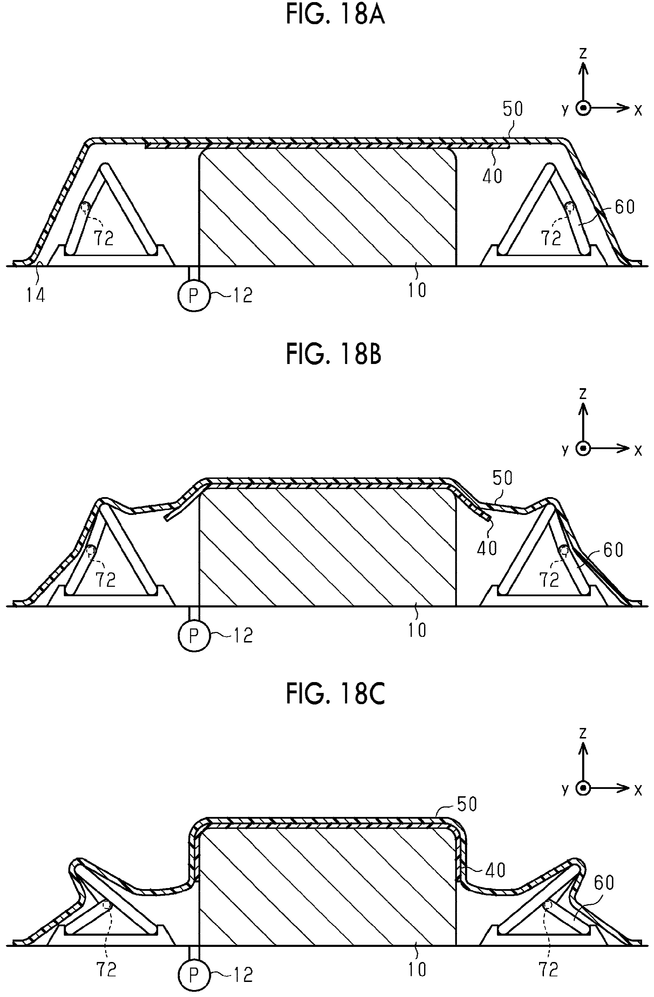

FIGs. 18A to 18C show a forming step according to the present embodiment.

FIG. 18A shows a state in which the sheet-like member 40 is disposed on the mold tool 10 and the upper surface of the sheet-like member 40 is covered with the bag sheet 50.

FIG. 18B shows an initial state of a step of decompressing a space partitioned by the bag sheet 50 and the floor surface 14 by the pump 12. In this state, the second plate member 64 and the third plate member 66 are bent such that the hinge portion 72 is displaced to a side close to the first plate member 62. Therefore, the height of the bellows dam 60 is slightly increased. As a result, the end part of the sheet-like member 40 is pulled in a direction in which the bellows dam 60 is positioned by the tension of the bag sheet 50. On the other hand, the height of the bag sheet 50 near the edge portion of the upper surface of the mold tool 10 is reduced by the decompression. Therefore, the pressure is applied to a portion of the sheet-like member 40 positioned near the edge portion of the mold tool 10 from the bag sheet 50. Therefore, a portion of the sheet-like member 40 close to the upper surface of the mold tool 10 is pressed against the side wall 10a of the mold tool 10.

FIG. 18C shows a middle state of the step of decompressing the space partitioned by the bag sheet 50 and the floor surface 14 by the pump 12. In this state, the height of the bellows dam 60 becomes low. Therefore, the bag sheet 50 is further lowered. Therefore, a portion of the region of the sheet-like member 40 that protrudes from the upper surface of the mold tool 10 to a portion farther from the upper surface of the mold tool 10 is pressed against the mold tool 10 by the bag sheet 50.

As described above, the wrinkles of the sheet-like member 40 can be suppressed by using the bellows dam 60.

### <Correspondence>

Correspondences between the features in the above-described embodiments and features described in the column "Supplementary Notes" below are as follows. In the following, a correspondence relationship is shown for each number of the solutions described in the "Supplementary Notes" section. [1, 2, 10] The processing target member corresponds to the sheet-like member 40. The forming target arrangement step corresponds to the step shown in FIG. 5. The step of covering with the bag sheet corresponds to the step shown in FIG. 7. The step of reducing the pressure corresponds to the step shown in FIG. 8. The compressible member corresponds to the compressible member 20. [3] The frame member corresponds to the frame member 30. [4] The virtual rectangle corresponds to the virtual rectangle VR in FIG. 4. [5] The matters related to the solution 5 correspond to the shape of the frame member 30 shown in FIG. 4. [6] The matters related to the solution 6 correspond to FIGs. 1 and 14. [7] The matters related to the solution 7 correspond to the shape of the upper member 22. The compression direction corresponds to the z direction. [8] The matters related to the solution 8 correspond to FIG. 14. The compression direction corresponds to the z direction. [9] The matters related to the solution 9 correspond to FIGs. 14 and 15. The compression direction corresponds to the z direction.

### <Other Embodiments>

The present embodiment can be implemented by being changed as follows. The present embodiment and the following change examples can be implemented by being combined with each other within a range where there is no technical contradiction.

### "Regarding Processing Target Member"

The sheet-like member 40 is not limited to a prepreg including a thermosetting resin and carbon fibers. For example, the sheet-like member 40 may include, as inorganic fibers, graphite fibers, silicon carbide fibers, alumina fibers, boron fibers, glass fibers, or the like instead of carbon fibers. In addition, it is not essential that the fiber member provided in the sheet-like member 40 is an inorganic fiber. For example, the fiber member provided in the sheet-like member 40 may include organic fibers such as aramid fibers and polyethylene fibers.

The resin material included in the sheet-like member 40 is not necessarily a thermosetting resin. The resin material included in the sheet-like member 40 may be, for example, a thermoplastic resin. The sheet-like member 40 is not necessarily a prepreg. In addition, it is not necessarily required that the sheet-like member 40 is a member including a resin. The sheet-like member 40 may be, for example, a composite material such as a dry fabric that does not include a resin.

In a case where the processing target member is the sheet-like member 40 in which a plurality of sheets are laminated, it is not essential to make the position of the slit 42 provided in the sheet-like member 40 different among the respective sheet-like members 40.

In a case where the processing target member is the sheet-like member 40 in which a plurality of sheets are laminated, it is not essential to provide the slit 42 in the sheet-like member 40. In a case where each of the plurality of sheet-like members 40 does not include the slit 42, the strength of the molded product can be more easily increased as compared to a case where the slit 42 is provided.

The processing target member is not essential to be the sheet-like member 40 in which a plurality of sheets are laminated.

### "Regarding Opening of Frame Member"

The opening portion shape of the frame member 30 is not essential to be a similar shape to the shape of the upper surface of the mold tool 10. For example, in a case where the cross-sectional area of the mold tool 10 increases from the upper surface to the lower surface, the edge portion of the opening portion 32 may have a similar shape to the shape of the outer periphery of the mold tool 10 in the middle between the point where the end of the sheet-like member 40 contacts and the upper surface.

The frame member 30 is not limited to a frame member in which the edge portion of the opening portion 32 has a similar shape to the shape of the outer periphery of the mold tool 10. Even in a case where the shape is not similar, the gap between the mold tool 10 and the frame member 30 can be suppressed from varying depending on the location by setting the shape to a shape corresponding to the outer periphery of the mold tool 10. In order to suppress the variation, for example, the amount by which the contour of the virtual rectangle VR protrudes into the opening portion 32 from the edge portion of the opening portion 32 of the frame member 30 may be set as follows. That is, the protrusion amount may be set to be smaller at a portion where the distance between the virtual rectangle VR and the outer periphery of the mold tool 10 is large than at a portion where the distance between the virtual rectangle VR and the outer periphery of the mold tool 10 is small.

### "Regarding Adjustment of Compression Amount of Compressible Member"

The cross-sectional shape of the compressible member 20 in the plane orthogonal to the up-down direction is not limited to a shape set for the purpose of smoothly compressing the compressible member 20. For example, the cross-sectional area may be adjusted according to a degree to which the bag sheet 50 is to be stretched.

In the above configuration, the compression amount with respect to the applied pressure is adjusted by the cross-sectional shape of the compressible member 20 in the plane orthogonal to the up-down direction, but the present disclosure is not limited thereto. For example, the compression amount may be adjusted depending on which of a plurality of members having the same shape and the same dimensions and having different compression amounts with respect to the applied pressure is used. That is, for example, the compressible member 20 having a dense dot in FIG. 14 may be configured of using a material having a smaller compression amount than the compressible member 20 having a light dot.

A plurality of compressible members 20 having both different cross-sectional shapes and different materials in the plane orthogonal to the up-down direction may be prepared. As a result, the compression amount of the compressible member 20 with respect to the applied pressure can be adjusted.

### "Regarding Compressible Member"

The upper member 22 is not limited to a member having a shape of a square pyramid frustum. The upper member 22 may have, for example, a shape of a square pyramid. The upper member 22 may have, for example, a shape of a conical frustum.

The configuration in which the cross-sectional area of the compressible member 20 is different in the up-down direction is not limited to a configuration in which the upper cross-sectional area is greater than or equal to the lower cross-sectional area. For example, the upper surface of the upper member 22 may be disposed to be in contact with the lower member 24.

The configuration in which the cross-sectional area of the compressible member 20 is different in the up-down direction is not essential.

The compressible member 20 is not necessarily composed of the upper member 22 and the lower member 24. The compressible member 20 may be, for example, a member that is divided into three parts in the up-down direction.

The compressible member 20 is not essential to consist of members that are divided in the up-down direction.

The compressible member 20 is not essential to consist of a plurality of members that are divided in a plane orthogonal to the up-down direction.

The member that contracts by applying pressure is not limited to a member composed of a sponge. The member that contracts by applying pressure may be composed of, for example, rubber.

### "Regarding Frame member"

The frame member 30 is not essential to have a flat shape. The frame member 30 may have, for example, a shape that is directed downward as the frame member 30 is spaced from the mold tool 10. In addition, the frame member 30 may have, for example, a position on the z-axis that is different depending on the region as shown in FIG. 3. In this case, the region corresponding to the portion of the frame member 30 where the sheet-like member 40 is less likely to be bent may be set to have a smaller value on the z-axis.

The method of dividing the frame member into a plurality of parts is not limited to that shown in FIG. 15.

### "Support Member"

The support member is not essential to be the frame member. For example, a plurality of plate-like members that are disposed to be spaced from each other may be used. In addition, for example, a rod-like member parallel to one side of the mold tool 10 may be used.

### "Regarding molded product"

The shape of the upper surface of the mold tool 10 is not limited to the shape shown in FIG. 4.

### "Regarding Producing method of molded product"

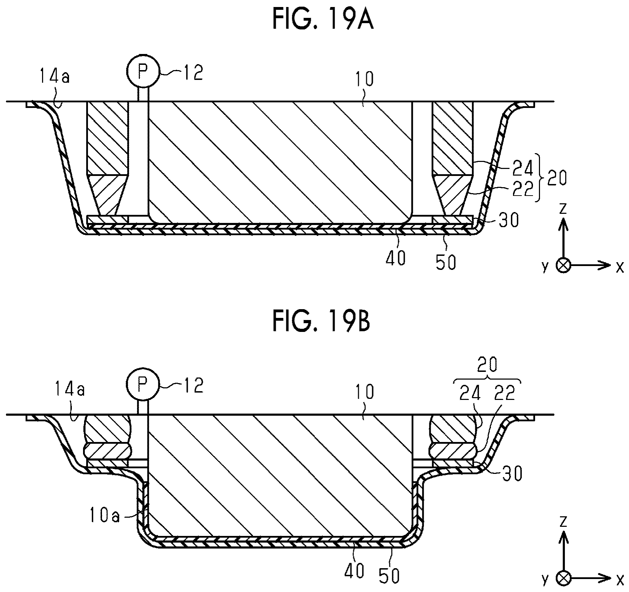

The workpiece arrangement step is not essential to be a step of disposing the sheet-like member 40 on the upper surface of the mold tool 10. For example, a step of fixing the mold tool 10 to a ceiling and bringing the sheet-like member 40 into contact with the lower surface of the mold tool 10 may be used as the processing target arrangement step. FIGs. 19A and 19B show a part of the step for producing in this case. FIGs. 19A and 19B show steps corresponding to FIGs. 7 and 8. In the example shown in FIGs. 19A and 19B, the mold tool 10 is fixed to the ceiling 14a, and the pump 12 is provided on the ceiling 14a.

However, it is not essential that the mold tool 10 is disposed on the floor surface 14 or the ceiling 14a. For example, the sheet-like member 40 with the mold tool 10 in a state of being fixed to the side wall of the producing factory. In other words, the compression direction of the compressible member 20 is not limited to the vertical direction, and may be a horizontal direction or the like.

### <Supplementary Notes>

Solution 1. A molded product manufacturing method including: a workpiece arrangement step of arranging a workpiece member to come into contact with a surface of a mold tool; a step of covering the workpiece member with a bag sheet from a side opposite to the mold tool among the workpiece member; and a step of depressurizing a space covered with the bag sheet, wherein the workpiece member is a sheet-like member having an area larger than an area of the surface of the mold tool, and the workpiece arrangement step is executed in a state in which a compressible member for supporting a peripheral portion of the workpiece member is arranged around the mold.

In the above-described method, the above-described processing target member is disposed to be in contact with the surface of the mold tool in a state in which the compressible member is disposed around the mold. Therefore, the peripheral portion of the processing target member is limited to be positioned on the mold tool side by the compressible member. Then, the space covered with the bag sheet is depressurized in a state in which the bag sheet is covering the processing target member. As a result, since the compressible member is compressed, the processing target member gradually comes into contact with the mold tool from an inner side of the outer peripheral portion. As a result, the outer peripheral portion of the processing target member can be brought into contact with the mold tool last. As a result, it is possible to suppress the occurrence of wrinkles in the processing target member.

Solution 2. The molded product manufacturing method according to the first aspect, in which the workpiece arrangement step is a step of disposing the workpiece member on the mold, the step of covering with the bag sheet is a step of covering the workpiece member disposed on an upper surface of the mold tool from an upper surface of the workpiece member, and the workpiece member is a sheet-like member having an area larger than the upper surface of the mold tool.

In the above-described method, the processing target member is disposed on the mold tool in a state in which the compressible member is disposed around the mold. Therefore, the position of the peripheral portion of the processing target member is limited to be lowered by the compressible member. Then, the space covered with the bag sheet is depressurized in a state in which the bag sheet is covering the processing target member. As a result, since the compressible member is compressed, the processing target member gradually comes into contact with the mold tool from an inner side of the outer peripheral portion. As a result, the outer peripheral portion of the processing target member can be brought into contact with the mold tool last. As a result, it is possible to suppress the occurrence of wrinkles in the processing target member.

Solution 3. The molded product manufacturing method according to the first or second aspect, in which, in the workpiece arrangement step, at least a part of the compressible member supports the workpiece member via a supporting member.

In the above-described method, it is possible to suppress the compressible member from being pulled by the bag sheet and being displaced, as compared to a case in which the support member is not provided. Therefore, in the decompression step, it is easier to displace the compressible member in the compression direction as compared to a case in which the support member is not provided.

Solution 4. The molded product manufacturing method according to the third aspect, in which the supporting member is a frame member, the frame member has an opening larger in dimension than the mold tool, a length in a direction from an edge of the opening of the frame member toward an inside of the opening, which is defined as a positive direction, from the edge of the opening toward a contour of a virtual rectangle, is smaller at a position where a distance between the virtual rectangle and an outer periphery of the mold tool is larger than at a position where the distance between the virtual rectangle and the outer periphery of the mold tool is small, and the virtual rectangle is a rectangle in which the outer periphery of the mold tool is inscribed.

In the above-described method, the shape of the opening portion is determined according to the outer peripheral shape of the mold. Therefore, it is possible to suppress the distance between the edge portion of the opening portion and the mold tool from varying depending on the location.

Solution 5. The molded product manufacturing method according to the third or fourth aspect, in which the supporting member is a frame member, the frame member has an opening larger in dimension than the mold tool, and an edge of the opening of the frame member and an outer periphery of the mold tool have similar shapes.

According to the above-described configuration, since the opening portion of the frame member and the outer peripheral portion of the mold tool have similar shapes, it is possible to suppress the variation in the distance between the edge portion of the opening portion and the mold.

Solution 6. The molded product manufacturing method according to any one of the first to fifth aspects, in which the compressible member arranged in the workpiece arrangement step includes members arranged with a spacing therebetween.

**In** the above-described method, since at least a part of the compressible members is disposed to be spaced from each other, in the decompression step, even in a case where the compressible members expand in a direction facing each other as the compressible members are compressed, it is possible to suppress the compressible members from interfering with each other.

Solution 7. The molded product manufacturing method according to any one of the first to sixth aspects, in which the compressible member has portions having different cross-sectional areas at different positions in a compression direction, and the cross-sectional area is an area of a cross section in a plane orthogonal to the compression direction.

In the above-described configuration, the compressible member has a portion where the cross-sectional area is small in the compression direction. Therefore, it is possible to reduce a pressure required at the start of the compression as compared to a case where the cross-sectional area is uniform in the compression direction. Therefore, in the decompression step, the compressible member can be smoothly compressed.

Solution 8. The molded product manufacturing method according to any one of the first to seventh aspects, in which the compressible member has different compression amounts with respect to applied pressure depending on positions in a plane orthogonal to a compression direction.

In the decompression step, a bendability of the workpiece member in a case of bending to contact the side wall of the mold tool may change depending on a region of a surface of the mold tool that comes into contact with the workpiece member. In this case, a timing at which the workpiece member comes into contact with the side wall of the mold tool may vary depending on the region. Therefore, in the above-described method, the compressible member is disposed such that the compression amount for the applied pressure is different depending on the position in the plane. As a result, since the compressible member that is easily compressed can be disposed at the portion that is difficult to bend, it is possible to promote bending of the portion that is difficult to bend.

Solution 9. The molded product manufacturing method according to any one of the third and seventh aspects, in which the compressible member has different compression amounts with respect to applied pressure depending on positions in a plane orthogonal to a compression direction, and the supporting member is separable into a plurality of regions in the plane.

In the decompression step, a bendability of the workpiece member in a case of bending to contact the side wall of the mold tool may change depending on a region of a surface of the mold tool that comes into contact with the workpiece member. In this case, a timing at which the workpiece member comes into contact with the side wall of the mold tool may vary depending on the region. Therefore, in the above-described method, the compressible member is disposed such that the compression amount for the applied pressure is different depending on the position in the plane. As a result, since the compressible member that is easily compressed can be disposed at the portion that is difficult to bend, it is possible to promote bending of the portion that is difficult to bend.

Solution 10. A molded product manufacturing apparatus in the molded product manufacturing method according to any one of first to ninth aspects, including: a pump that suctions fluid in the space covered with the bag sheet in the step of depressurizing; the mold tool; and the compressible member.

By using the above-described producing apparatus, the method according to the first to ninth aspects can be realized.

## Claims

1. A molded product manufacturing method comprising:
a workpiece arrangement step of arranging a workpiece member to come into contact with a surface of a mold tool;
a step of covering the workpiece member with a bag sheet from a side opposite to the mold tool among the workpiece member; and
a step of depressurizing a space covered with the bag sheet,
wherein the workpiece member is a sheet-like member having an area larger than an area of the surface of the mold tool, and
the workpiece arrangement step is executed in a state in which a compressible member for supporting a peripheral portion of the workpiece member is arranged around the mold.

2. The molded product manufacturing method according to claim 1,
wherein the workpiece arrangement step is a step of disposing the workpiece member on the mold,
the step of covering with the bag sheet is a step of covering the workpiece member disposed on an upper surface of the mold tool from an upper surface of the workpiece member, and
the workpiece member is a sheet-like member having an area larger than the upper surface of the mold tool.

3. The molded product manufacturing method according to claim 1,
wherein, in the workpiece arrangement step, at least a part of the compressible member supports the workpiece member via a supporting member.

4. The molded product manufacturing method according to claim 3,
wherein the supporting member is a frame member,
the frame member has an opening larger in dimension than the mold tool,
a length in a direction from an edge of the opening of the frame member toward an inside of the opening, which is defined as a positive direction, from the edge of the opening toward a contour of a virtual rectangle, is smaller at a position where a distance between the virtual rectangle and an outer periphery of the mold tool is larger than at a position where the distance between the virtual rectangle and the outer periphery of the mold tool is small, and
the virtual rectangle is a rectangle in which the outer periphery of the mold tool is inscribed.

5. The molded product manufacturing method according to claim 3,
wherein the supporting member is a frame member,
the frame member has an opening larger in dimension than the mold tool, and
an edge of the opening of the frame member and an outer periphery of the mold tool have similar shapes.

6. The molded product manufacturing method according to claim 1,
wherein the compressible member arranged in the workpiece arrangement step includes members arranged with a spacing therebetween.

7. The molded product manufacturing method according to claim 1,
wherein the compressible member has portions having different cross-sectional areas at different positions in a compression direction, and
the cross-sectional area is an area of a cross section in a plane orthogonal to the compression direction.

8. The molded product manufacturing method according to claim 1,
wherein the compressible member has different compression amounts with respect to applied pressure depending on positions in a plane orthogonal to a compression direction.

9. The molded product manufacturing method according to claim 3,
wherein the compressible member has different compression amounts with respect to applied pressure depending on positions in a plane orthogonal to a compression direction, and
the supporting member is separable into a plurality of regions in the plane.

10. A molded product manufacturing apparatus in the molded product manufacturing method according to claim 1, comprising:
a pump that suctions fluid in the space covered with the bag sheet in the step of depressurizing;
the mold tool; and
the compressible member.
